# EUROPEAN PATENT APPLICATION

(11) **EP 4 223 605 A1**
(43) Date of publication of application: **09.08.2023**
(21) Application number: 22154996.7
(22) Date of filing: 03.02.2022
(51) Int. Cl.: B60W 30/14

(54) **EXTERNALLY CONTROLLED SPEED LIMIT SYSTEM OF UNDER-GROUND MINING VEHICLES**

(71) Applicant: Sandvik Mining and Construction Oy, 33330 Tampere (FI)
(72) Inventor: VÄRE, Ville, 33330 Tampere (FI); HIRVONEN, Markus, 33330 Tampere (FI)
(74) Representative: Sandvik

(57) **Abstract**

An externally controlled speed limiter system of underground mining vehicles, comprising speed limiters (101) for indicating a maximum speed value; reading means (102) for receiving the maximum speed value from the speed limiters (101); and speed control means (103) configured to limit the maximum speed of a mining vehicle; wherein the reading means (102) and the speed control means (103) are arranged to be installed to the mining vehicle, and the speed limiters (101) are configured to form speed limit zones on the underground road network, wherein the maximum speed of the underground mining vehicle entering the speed limited zone is limited to the maximum speed value indicated by the speed limiters.

## Description

### TECHNICAL FIELD

The present invention relates to externally controlled speed limit systems of underground mining vehicles.

### BACKGROUND

In mines, the driving conditions are often difficult, because of ascents and descents combined with narrow roads. Further, the underground road network changes occasionally, and the driver needs to be aware of the new different routes when operating the roads. This often causes accidents which occur due to over speeding. Therefore, the underground roads have often permitted speed limit and the operator may adjust the maximum speed of the vehicle manually making it easier to work. This is advantageous especially when driving downhill as the mining vehicle speed does not rise too high without the use of the brake pedal. However, as the speed limit is set manually, it is possible to drive above the permitted speed limit endangering other miners and the mining vehicle itself.

It is known to set speed limits to vehicles by using satellite-based location system, such as global positioning system (GPS). However, such system is inoperable undergrounds as the signal won't pass through the layer of ground above the underground road network.

### OBJECTIVE

The objective of the system is to alleviate the disadvantages mentioned above.

In particular, it is an objective of the present system to reduce accidents in mines, which are caused by over speeding.

### SUMMARY

According to a first aspect, the present invention provides a system for limiting maximum speed of an underground mining vehicle.

The externally controlled speed limiter system of underground mining vehicles comprises at least one speed limiter for indicating a maximum speed value; reading means for receiving the maximum speed value from the speed limiter; and speed control means configured to limit the maximum speed of a mining vehicle. The reading means and the speed control means are arranged to be installed to the mining vehicle, and the speed limiter is configured to form speed limit zone on the underground road network, wherein the maximum speed of the underground mining vehicle entering the speed limited zone is limited to the maximum speed value indicated by the speed limiter.

The advantage of the system is that the maximum speed limit of underground mining vehicle may be limited externally, i.e. without any manual adjustment from the vehicle operator. The underground road network, for example in mines, is continuously changing. Therefore, it is possible that the vehicle operator is not aware of the conditions of the new routes. For example, the new route may comprise zones having sharp bends or steep descents which require lower speed than normal straight roads. With the present system, the maximum speed limit of the underground mining vehicle may be limited when the underground mining vehicle is entering and operating inside these speed limited zones externally preventing speeding, which would endanger other miners and the vehicle itself.

In an embodiment of the system, the speed limiter is reprogrammable. The advantage of the embodiment is that same speed limiter may be used more than once and/or in different locations, which require different maximum speed limit values.

In an embodiment of the system, the speed limiter is connected to a wired network for setting the speed limit value. The advantage of the embodiment is that the maximum speed limit values may be set at a distance, e.g. outside of the underground road network.

In an embodiment of the system, the speed limiter is a movable radio-frequency identification (RFID) tag and the reading means are radio-frequency identification (RFID) reader.

In an embodiment of the system, the speed limiter is arranged to be fastened to the structures of the underground mine.

In an embodiment of the system, the speed limiter contains prestored position information. The advantage of the embodiment is that the speed limiter may be used for identifying vehicles' exact location in an underground road network.

In an embodiment of the system, the system is configured to determine the position of the mining vehicles between the speed limiters with prestored position information.

In an embodiment of the system, the speed limiter is a radio frequency identification (RFID) tag, which is programmable on the site.

In an embodiment of the system, the system comprises an underground mining vehicle.

In an embodiment of the system, the speed control means comprises a microcontroller for receiving the speed value information from the reading means, and an engine control unit, wherein the microcontroller is configured to send a signal to the engine control unit for limiting the speed to the speed limit value or for removing the speed limit.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram showing the system with one speed limiter,
**Fig. 2** is a block diagram showing the system with several speed limiters, and
**Fig. 3** shows an example of an underground road network wherein several underground mining vehicles are operating.

### DETAILED DESCRIPTION

The system described herein is an externally controlled speed limiter system of underground mining vehicles. The underground mining vehicle may be a mine machine or a construction machine e.g. a rock drilling rig, a development drill, a tunneling drilling machine, a surface drilling machine, a bolting or reinforcing vehicle, a rock removal machine, a long hole drill rig, an explosive charging machine, a loader, a transport vehicle, a loading machine, or hauling machine, setting vehicle of gallery arcs or nets, a concrete spraying machine, a crusher, a measuring vehicle, a passenger transport vehicle, or a loading or a hauling machine. The common feature for all these vehicles is that they are designed to operate in harsh conditions underground, wherein the road network is continuously changing.

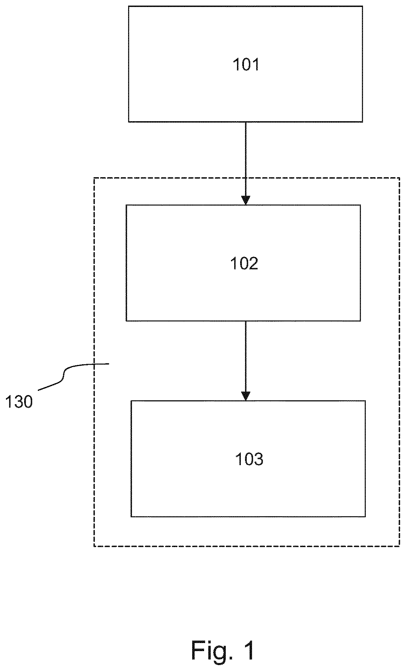

Figure 1 shows a block diagram of the externally controlled speed limiter system of underground mining vehicles 130. The system comprises at least one speed limiter 101, which indicates a maximum speed limit after the speed limiter 101, a reading means 102 for reading and receiving the maximum speed value from the speed limiter 101, and speed control means configured to limit the maximum speed of a mining vehicle driving pass the speed limiter. The reading means 102 and the speed control means 103 are installable or installed to the underground mining vehicle. The speed limiter 101 is configured to form speed limit zone on the underground road network 120, wherein the maximum speed of the underground mining vehicle entering the speed limited zone is limited to the maximum speed value indicated by the speed limiter. The speed limit is active all the time when the underground mining vehicle is operating inside these speed limit zones. After the underground mining vehicle exits the speed limit zone and drives past a speed limiter, the maximum speed limit may be removed or set to something else.

The system may comprise more than one speed limiter and the speed limiters defines speed limit zones on different sections of the underground road network.

One speed limiter may indicate two maximum speed limits and the permitted speed limit may depend on the direction in which the underground mining vehicle is heading. Thus, it should be understood that one speed limiter may be actually two speed limiters. For example, when the underground mining vehicle is passing the speed limiter and entering specific area of an underground road network, the same speed limiter may indicate different maximum speed value than exiting the same specific area of the underground road network. The speed limiter may also indicate that there is no maximum speed limit.

The speed limiters 101 may be disposable, i.e. each speed limiter has one maximum speed value without possibility to change the value. If the maximum speed value needs to be changed, the current speed limiter needs to be replaced with another speed limiter with the desired maximum speed value. Optionally, the speed limiters may be reprogrammable, i.e. the maximum speed value may be set, e.g. programmed, over and over again. The speed limiters may be programmable on site, i.e. the user must go within the range of the speed limiter and program the desired maximum speed value information to the speed limiter. Optionally, the speed limiters may be connected to the wired network, and the user may program the desired maximum speed value information to the speed limiter at a distance, for example from a base above ground.

The speed limiters 101 may be radio frequency identification (RFID) tags, which may be passive or active, comprising an emitter or tag containing maximum speed value information. Passive RFID tags do not contain any power source and they are activated when it comes within the range of the reader means 102. Active RFID tags turns on if there is power supply and they emit signals constantly or regularly. If RFID tags are used, the reading means comprise RFID reader, which is installable or installed to the underground mining vehicle. The RFID reader senses and detects the RFID tag and receives the signal including the maximum speed limit value information.

Optionally, the speed limiters may be visual signs and the reader means may comprise vision-based readers, such as machine vision or other camera-based means to read the visual signs.

The speed limiters 101 may be fastened to the structures of the mine. For example, the speed limiters may be fastened to the walls of the mine. Optionally, the speed limiters may have own stand, or they may be fastened to other structure, e.g. supportive structure, of the underground mine.

The speed limiters 101 may contain prestored position information, i.e. the location of the speed limiter. The position information may be read with the reading means and the location of the mining vehicle may be determined based on the position information. Further, the position information may be used to determine the mining vehicle location between speed limiters, i.e. in the speed limit zones. Specific algorithm may be used to help determining the location. The algorithm may comprise the prestored position information and the maximum speed value in the specific speed limit zone.

The speed control means 103 may comprise a microcontroller for receiving the speed value information from the reading means 102, and an engine control unit (ECU) for controlling the underground vehicle. The microcontroller may be configured to send signal to the ECU which adjusts the maximum speed of the underground mining vehicle based on the maximum speed limit value read from the speed limiter, or ECU removes the maximum speed limit if the speed limiter has indicated that the speed limit zone has ended.

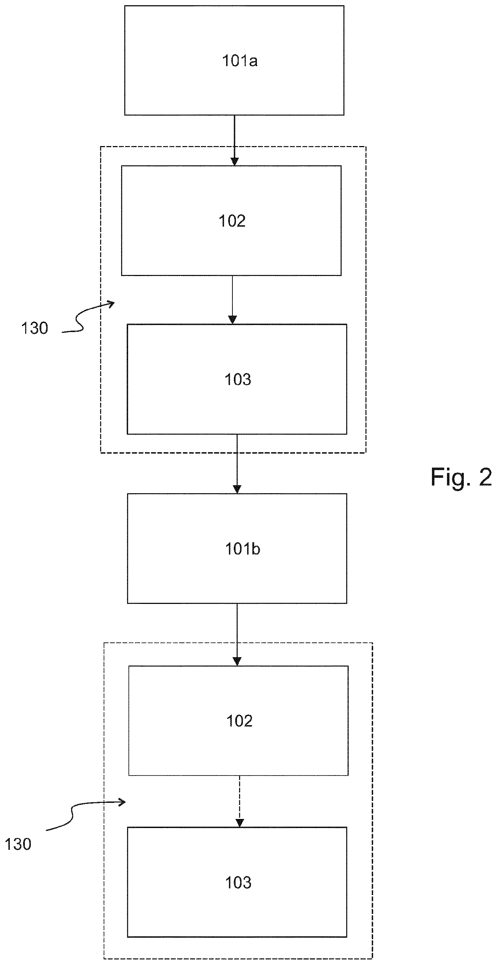

Figure 2 shows another block diagram according to the system having several speed limiters 101, wherein the underground mining vehicle 130 passes two speed limiters 101a and 101b. When the underground mining vehicle 130 reaches the first speed limiter 101a, the reading means 102 receives a first signal from the first speed limiter 101a. The first signal includes the first maximum speed value information, and the information is sent to the speed control means 103. The speed control means sets the maximum speed limit to the mining vehicle and decreases the speed if it is greater than the maximum speed value. Then the underground mining vehicle 130 reaches the second speed limiter 110b and the reading means 102 receives a second signal from the second speed limiter 110b. The second signal includes the second maximum speed value information, and the information is sent to the speed control means 103. The speed control means sets the maximum speed limit to the mining vehicle and decreases the speed if it is greater than the maximum speed value. As earlier described, the maximum speed limit value may also be unlimited, i.e. there is no maximum speed limit after that speed limiter.

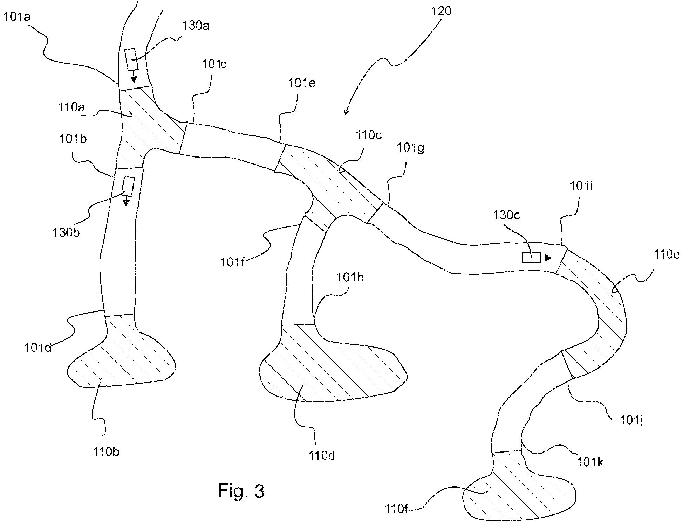

Figure 3 shows an example of an underground road network 120, wherein speed limiters 101a, 101b,... are used to form speed limit zones 110. Several underground mining vehicles 130a, 130b,... are operating on different sections of the underground road network. The first underground mining vehicle 130a is entering the first speed limit zone 110a. The reading means of the first underground mining vehicle 130a receives the maximum speed limit value information from the speed limiter 101a and the speed control means of the first underground mining vehicle 130a sets the maximum speed of the vehicle accordingly and slows if needed. The second underground mining vehicle 130b is exiting the first speed limit zone 110a. The reading means of the second underground mining vehicle 130b receives the maximum speed limit value from the speed limiter 101b and the speed control means of the first underground mining vehicle 130b sets the maximum speed of the vehicle accordingly. The third underground mining vehicle 130c is entering another speed limit zone 110e. The reading means of the third underground mining vehicle 130c receives the maximum speed limit value information from the speed limiter 101i and the speed control means of the first underground mining vehicle 130c sets the maximum speed of the vehicle accordingly and slows if needed.

The speed limit zones are especially useful on hazardous sections of the underground road network 120. Such sections may include intersections, curves, ascends, descends and operating sites. For each of these sections, specific speed limit zones may be formed by using above mentioned speed limiters. As the underground road network in mines constantly changes, the speed limiters are easily removed and replaced to different locations. The speed limit zones minimize the possibility of human errors and, thus, reduce accidents in mines.

Although the invention has been the described in conjunction with a certain type of system, it should be understood that the invention is not limited to any certain type of system. While the present inventions have been described in connection with a number of exemplary embodiments, and implementations, the present inventions are not so limited, but rather cover various modifications, and equivalent arrangements, which fall within the purview of prospective claims.

## Claims

1. An externally controlled speed limiter system of underground mining vehicles, comprising:
- at least one speed limiter (101) for indicating a maximum speed value,
- reading means (102) for receiving the maximum speed value from the speed limiter (101), and
- speed control means (103) configured to limit the maximum speed of a mining vehicle,
wherein the reading means (102) and the speed control means (103) are arranged to be installed to the mining vehicle, and
the speed limiter (101) is configured to form speed limit zone on the underground road network, wherein the maximum speed of the underground mining vehicle entering the speed limited zone is limited to the maximum speed value indicated by the speed limiter.

2. The externally controlled speed limiter system according to claim 1, wherein the speed limiter (101) is reprogrammable.

3. The externally controlled speed limiter system according to claim 1 or 2, wherein the speed limiter (101) is connected to a wired network for setting the speed limit value.

4. The externally controlled speed limiter system according to any one of claims 1 to 3, wherein the speed limiter is a movable radio-frequency identification (RFID) tag and the reading means are radio-frequency identification (RFID) reader.

5. The externally controlled speed limiter system according to any one of claims 1 to 4, wherein the speed limiter (101) is arranged to be fastened to the structures of the underground mine.

6. The externally controlled speed limiter system according to any one of claims 1 to 5, wherein the speed limiter (101) contains prestored position information.

7. The externally controlled speed limiter system according to claim 6, wherein the system is configured to determine the position of the mining vehicles between the speed limiters (101) with prestored position information.

8. The externally controlled speed limiter system according to any one of claims 1 to 7, wherein the speed limiter (101) is s radio frequency identification (RFID) tag, which is programmable on the site.

9. The externally controlled speed limiter system according to any one of claims 1 to 8, wherein the speed control means (103) comprises a microcontroller for receiving the speed value information from the reading means, and an engine control unit, wherein the microcontroller is configured to send a signal to the engine control unit for limiting the speed to the speed limit value or for removing the speed limit.

10. The externally controlled speed limiter system according to any one of claims 1 to 9, wherein the system comprises an underground mining vehicle.
